# EUROPÄISCHE PATENTSCHRIFT

(11) **EP 0 764 683 B1**
(45) Veröffentlichungstag und Bekanntmachung des Hinweises auf die Patenterteilung: **31.05.2006**
(21) Anmeldenummer: 96114370.8
(22) Anmeldetag: 09.09.1996
(51) Int. Cl.: C08K 3/30, C08K 3/32

(54) **Laserbeschriftbare Polymer-Formmassen**
Laser markable polymer dispersions
Masse à mouler polymériques marquables au laser

(30) Priorität: 21.09.1995 DE 19535055; 13.10.1995 DE 19538247
(43) Veröffentlichungstag der Anmeldung: 26.03.1997
(73) Patentinhaber: LANXESS Deutschland GmbH, 51369 Leverkusen (DE)
(72) Erfinder: Magerstedt, Herbert, 47445 Moers (DE); El-Sayed, Aziz, Dr., 51375 Leverkusen (DE); Gerling, Frank, 40223 Düsseldorf (DE)

(56) Entgegenhaltungen:
- EP-A- 0 063 768
- EP-A- 0 400 305
- EP-A- 0 542 115
- DATABASE WPI Section Ch, Week 8315 Derwent Publications Ltd., London, GB; Class A14, AN 83-35562K XP002017615 & JP-A-58 037 040 (ISHIKAWAJIMA-HARIMA JUKO) , 4.März 1983
- DATABASE WPI Section Ch, Week 8505 Derwent Publications Ltd., London, GB; Class A32, AN 85-030411 XP002017616 & SU-A-1 100 104 (LENINGRAD LENSOVET TECH) , 30.Juni 1984

## Beschreibung

Die Erfindung betrifft thermoplastische Polymer-Formmassen mit einem bestimmten Additivsystem, sowie aus diesen thermoplastischen Formmassen hergestellten Formkörper zur Laserbeschriftung.

Die Aufbringung von Mustern, Buchstaben, Zahlen und/oder Bildern mittels Laserstrahlenschreiber zur Kennzeichnung und Dekoration von Formteilen aus Kunststoffen gewinnt in zunehmenden Maße an Bedeutung. Neben der Wirtschaftlichkeit gegenüber herkömmlichen Beschriftungsverfahren bietet die Laserbeschriftung hohe Flexibilität hinsichtlich Schriftart, Schriftgröße und Schriftdesign, unabhängig von der Lotgröße. Das Markieren von elektrischen/elektronischen Bauelementen, Tastenkappen, Gehäusen und Ausweiskarten ist eine klassische Anwendung für Laserbeschriftung.

Folgende Möglichkeiten zur Kennzeichnung von Kunststoffen mittels Laserbeschriftung sind bekannt:
1. Dunkle Zeichen auf hellem Hintergrund
   Eine Polymermatrix wird mit hellen Färbemitteln - Pigmenten oder Farbstoffen - eingefärbt. Bei der Laserbeschriftung wird durch Absorption der Laserenergie die Polymermatrix/das Färbemittel partiell carbonisiert. Dabei entsteht eine dunkle Verfärbung der hellen Polymermatrix. Dieses Verhalten ist auf Polymere, die zum Carbonisieren neigen, beschränkt.
   Die hierdurch erreichbaren Kontrastverhältnisse reichen für viele Einsatzgebiete nicht aus.
   Die Zugabe von Färbemitteln, die durch Absorption der Laserenergie ihre Farbe ändern, wird in EP-A 0 190 997 beschrieben. So wird z.B. Polybutylenterephthalat mit Eisenoxid rot gefärbt. Bei der Laserbeschriftung entstehen dunkle Zeichen auf rotem Hintergrund. Das Kontrastverhältnis hat sich als nicht ausreichend erwiesen.
2. Helle Zeichen auf dunklem Hintergrund:
   Für diese Art der Beschriftung haben sich Polymere, Färbemittel oder Additive, die durch Absorption der Laserenergie zum Schäumen neigen, bewährt. Durch das Aufschäumen entstehen helle Schriften auf dunklem Untergrund. Die erreichbaren Kontrastverhältnisse sind für viele Einsatzgebiete nicht ausreichend.

Aus EP-A 0 400 305 sind laserbeschriftbare Formmassen bekannt, die als Zuschlagstoffe Kupfer (II)-hydroxid-phosphat oder Molybdän(VI)-oxid enthalten.

Aus JP-A-58 037 040 ist die Zugabe anorganischer Salze zu Fluor-enthaltenden Harzen bekannt die exotherm ein nicht entzündbares Gas freisetzen, wodurch die Harze auch bei hohen Sauerstoffkonzentrationen nur schwer entflammbar sind.

Aus SU-A 1 100 104 ist der Einsatz von Kupfernitrat und Mangansulfat in Polymercomposits bekannt um die Entwicklung toxischer Gase zu verhindern.

Aus EP-A 0 542 115 sind schließlich thermoplastische Formmassen mit laserintensiver Pigmentierung aus Kupfer (II) hydroxidphosphat bekannt.

Die vorliegende Erfindung betrifft Polymerformmassen, die bei der Absorption der Laserenergie dunkle Zeichen auf hellem Hintergrund mit sehr hohem Kontrastverhältnis ergeben.

Es wurde gefunden, daß Polymerformmassen, die Kupferpyrophosphathydrat allein oder in Kombination mit Kupfer-II-Phosphat, enthalten Formmassen ergeben, bei denen in der Polymermatrix dunkle Zeichen auf hellem Hintergrund durch Absorption der Laserenergie erreicht werden können. Durch Veränderung der Laserenergie können verschiedene Graustufen erhalten werden.

Gegenstand der vorliegenden Erfindung sind daher thermoplastische Formmassen, enthaltend
A) 99,95 bis 30, vorzugsweise 99,9 bis 35, insbesondere 99,9 bis 40 Gew.-Teile thermoplastisches Polymer
B) 0 bis 3 Gew.-Teile Kupferpyrophosphat-Hydrat,
C) 0 bis 3 Gew.-Teile Kupfer(II)-hydroxid-phosphat,
D) 0 bis 3 Gew.-Teile Mangansulfathydrat,
E) 0 bis 50 Gew.-Teile Füll- und Verstärkungsstoffe,
F) 0 bis 60 Gew.-Teile Flammschutzadditive,
G) 0 bis 30 Gew.-Teile Elastomermodifikatoren,
H) 0 bis 8 Gew.-Teile Antimontrioxid,
wobei mindestens eine der Komponenten B) oder D) in der Mischung enthalten ist und als Komponente (A) Polymere oder Copolymere auf Basis von Polyalkylenterephthalaten, aromatischen Polyestern, Polyamid, Polycarbonat, Polyacrylat, Polymethacrylat, ABS-Pfropfpolymerisate, Polyolefine wie Polyethylen oder Polypropylen, Polystyrol, Polyvinylchlorid, Polyoxymethylen, Polyimid, Polyether und Polyetherketone, die einzeln oder als Blend aus verschiedenen Polymeren eingesetzt werden können.

Gegenstand der Erfindung ist weiterhin die Verwendung der oben genannten thermoplastischen Formmassen zur Herstellung von Formkörpern oder Formteilen, die mittels Laserenergie beschriftet werden sowie die daraus hergestellten Formkörper.

Gegenstand der Erfindung ist weiterhin ein Verfahren zur Beschriftung von Formkörpern mittels Laserenergie.

Als Energiequellen können handelsübliche Lasersysteme, bevorzugt Nd-YAG-Festkörperlaser, verwendet werden. Die Wellenlänge kann zwischen 193 und 10 600 nm, bevorzugt 532 und 1 064 nm, liegen.

Die erfindungsgemäß verwendeten Formmassen können zur Aufbringung von optischen Informationen in Form von Mustern, Graphiken, Zahlen, Buchstaben, Schriftzeichen, Bildern (z.B. Passbildern, Portraits, Fotos) usw. mittels Laserenergie, z.B. durch Laserstrahlenschreiber eingesetzt werden.

So können z.B. fotografische Abbildungen auf die erfindungsgemäß verwendeten Formmassen übertragen werden.

### Komponente A)

Als Polymermatrix eignen sich Polymere oder Copolymere z.B. auf Basis von Polyalkylenterephthalaten, aromatischen Polyestern, Polyamid, Polycarbonat, Polyacrylat, Polymethacrylat, ABS-Pfropfpolymerisate, Polyolefine wie Polyethylen oder Polypropylen, Polystryrol, Polyvinylchlorid, Polyoxymethylen, Polyimid, Polyether und Polyetherketone, die einzeln oder als Blend aus verschiedenen Polymeren eingesetzt werden können.

Polyalkylenterephthalate im Sinne der Erfindung sind Reaktionsprodukte aus aromatischen Dicarbonsäure oder ihren reaktionsfähigen Derivaten (z.B. Dimethylestern oder Anhydriden) und aliphatischen, cycloaliphatischen oder araliphatischen Diolen und Mischungen dieser Reaktionsprodukte.

Bevorzugte Polyalkylenterephthalate lassen sich aus Terephthalsäure (oder ihren reaktionsfähigen Derivaten) und aliphatischen oder cycloaliphatischen Diolen mit 2 bis 10 C-Atomen nach bekannten Methoden herstellen (Kunststoff-Handbuch, Bd. VIII, S. 695 FF, Karl-Hanser-Verlag, München 1973).

Bevorzugte Polyalkylenterephthalate enthalten mindestens 80, vorzugsweise 90 Mol.-%, bezogen auf die Dicarbonsäure, Terephthalsäurereste und mindestens 80, vorzugsweise mindestens 90 Mol.-%, bezogen auf die Diolkomponente, Ethylenglykol- und/oder Butandiol-1,4-reste.

Die bevorzugten Polyalkylenterephthalate können neben Terephthalsäureresten bis zu 20 Mol-% Reste anderer aromatischer Dicarbonsäuren mit 8 bis 14 C-Atomen oder aliphatischer Dicarbonsäuren mit 4 bis 12 C-Atomen enthalten, wie Reste von Phthalsäure, Isophthalsäure, Naphthalin-2,6-dicarbonsäure, 4,4'-Diphenyldicarbonsäure, Bernstein-, Adipin-, Sebacinsäure, Azelainsäure, Cyclohexandiessigsäure.

Die bevorzugten Polyalkylenterephthalate können neben Ethylen- bzw. Butandiol-1,4-glykolresten bis zu 20 Mol.% anderer aliphatischer Diole mit 3 bis 12 C-Atomen oder cycloaliphatischer Diole mit 6 bis 21 C-Atomen enthalten, z.B. Reste von Propandiol-1,3, 2-Ethylpropandiol-1,3, Neopentylglykol, Pentan-diol-1,5, Hexandiol-1.6, Cyclohexan-dimethanol-1,4, 3-Methylpentandiol-2,4, 2-Methylpentandiol-2,4, 2,2,4-Trimethylpentandiol-1,3 und -1,6,2-Ethylhexandiol-1,3 2,2-Diethylpropandiol-1,3, Hexandiol-2,5, 1,4-Di-(β-hydroxyethoxy)-benzol, 2,2-Bis-(4-hydroxycyclohexyl)-propan, 2,4-Dihydroxy-1,1,3,3-tetramethyl-cyclobutan, 2,2-bis-(3-β-hydroxyethoxyphenyl)-propan und 2,2-bis-(4-hydroxypropoxyphenyl)-propan (DE-OS 24 07 674, 24 07 776, 27 15 932).

Die Polyalkylenterephthalate können durch Einbau relativ kleiner Mengen 3- oder 4-wertiger Alkohole oder 3- oder 4-basischer Carbonsäure, wie sie z.B. in der DE-OS 19 00 270 und der US-PS 3 692 744 beschrieben sind, verzweigt werden. Beispiele bevorzugtes Verzweigungsmittel sind Trimesinsäure, Trimellitsäure, Trimethylolethan und -propan und Pentaerythrit.

Es ist ratsam, nicht mehr als 1 Mol.-% des Verzweigungsmittels, bezogen auf die Säurekomponente, zu verwenden.

Besonders bevorzugt sind Polyalkylenterephthalate, die allein aus Terephthalsäure und deren reaktionsfähigen Derivaten (z.B. deren Dialkylestern) und Ethylenglykol und/oder Butandiol-1,4 hergestellt worden sind (Polyethylen- und Polybutylentherephthalat), und Mischungen dieser Polyalkylenterephthalate.

Bevorzugte Polyalkylenterephthalate sind auch Copolyester, die aus mindestens zwei der obengenannten Säurekomponenten und/oder aus mindestens zwei der obengenannten Alkoholkomponenten hergestellt sind, besonders bevorzugte Copolyester sind Poly-(ethylenglykol/butandiol-1,4)-terephthalate.

Die als Komponente A vorzugsweise verwendeten Polyalkylenterephthalate besitzen im allgemeinen eine Intrisic-Viskosität von ca. 0,4 bis 1,5 dl/g, vorzugsweise 0,5 bis 1,3 dl/g, jeweils gemessen in Phenol/o-Dichlorbenzol (1:1 Gew.-Teile) bei 25°C.

Unter aromatischen Polycarbonaten im Sinne dieser Erfindung werden Homopolycarbonate und Mischungen dieser Polycarbonate verstanden, denen z.B. mindestens eines der folgenden Diphenole zugrunde liegt:
Hydrochinon,
Resorcin,
Dihydroxydiphenyle,
Bis-(hydroxyphenyl)-alkane,
Bis-(hydroxyphenyl)-cycloalkane,
Bis-(hydroxyphenyl)-sulfide,
Bis-(hydroxyphenyl)-ether,
Bis-(hydroxyphenyl)-ketone,
Bis-(hydroxyphenyl)-sulfone,
Bis-(hydroxyphenyl)-sulfoxide,
α,α'- Bis-(hydroxyphenyl)-diisopropylbenzole
sowie deren kernalkylierte und kernhalogenierte Derivate.

Diese und weitere geeignete Diphenole sind z.B. in den US-PS 3 028 365, 2 999 835, 3 148 172, 2 275 601, 2 991 283, 3 271 367, 3 062 781, 2 970 131 und 2 999 846, in den deutschen Offenlegungsschriften 1 570 703, 2 063 050, 2 063 052, 2 211 956, 22 11 957 der französischen Patentschrift 1 561 518 und in der Monographie "H. Schnell, Chemistry und Physics of Polycarbonates, Interscience Publishers, New York 1964", beschrieben.

Bevorzugte Diphenole sind beispielsweise:
2,2-Bis-(4-Hydroxyphenyl)-propan,
1, 1-Bis-(4-hydroxyphenyl)-cyclohexan,
2,2-Bis-(3,5-dichlor-4-hydroxyphenyl)-propan
2,2-Bis-(3,5-dibrom-4-hydroxyphenyl)-propan,
2,2-Bis-(3,5-dimethyl-4-hydroxyphenyl)-propan,
Bis-(3,5-dimethyl-4-hydroxyphenyl)-methan,
Bis-(4-hydroxyphenyl)-sulfid,
1,1-Bis-(4-hydroxyphenyl)-3,3,5-trimethylcyclohexan,

Die Diphenole können sowohl einzeln als auch im Gemisch eingesetzt werden. Besonders bevorzugte aromatische Polycarbonate sind Polycarbonate auf der Basis von 2,2-Bis-(4-hydroxyphenyl)-propan bzw. einem der anderen als bevorzugt genannten Diphenole. Ganz besonders bevorzugt sind solche auf Basis von 2,2-Bis-(4-hydroxyphenyl)-propran, 2,2-Bis-(3,5-dimethyl-4-hydroxyphenyl)-propan oder 1,1-Bis-(4-hydroxyphenyl)-3,3,5-trimethylcyclohexan oder Gemische aus 2,2-Bis-(4-hydroxyphenyl)-propan und 1,1-Bis-(4-hydroxyphenyl)-3,3,5-trimethylcyclohexan.

Die aromatischen Polycarbonate können nach bekannten Verfahren hergestellt werden, z.B. durch Schmelzumesterung eines entsprechenden Bisphenols mit Diphenylcarbonat und in Lösung aus Bisphenolen und Phosgen. Die Lösung kann homogen sein (Pyridinverfahren) oder heterogen (Zweiphasengrenzflächenverfahren). (vgl. H. Schnell, "Chemistry and Physics of Polycarbonates", Polymer Reviews, Vol. IX, S 33ff, Intersciencs Publ. 1964).

Die aromatischen Polycarbonate besitzen in der Regel mittlere Molekulargewichte M̅_{W} von ca. 10.000 bis 200.000, vorzugsweise 20.000 bis 80.000 (ermittelt durch Gelchromatographie nach vorheriger Eichung).

Copolycarbonate im Sinne der Erfindung sind insbesondere Poydiorganosiloxan-Polycarbonat-Blockcopolymere mit mittlerem Molekulargewicht M̅_{w} von ca. 10.000 bis 200.000, vorzugsweise 20.000 bis 80.000 (ermittelt durch Gelchromatographie nach vorheriger Eichung) und mit einem Gehalt an aromatischen Carbonatstruktureinheiten von etwa 75 bis 97,5 Gew.-%, bevorzugt 85 bis 97 Gew.-% und einem Gehalt an Polydiorganosiloxanstruktureinheiten von etwa 25 bis 2,5 Gew.-%, bevorzugt 15 bis 3 Gew-%, wobei die Blockcopolymeren ausgehend von α,ω-Bishydroxyaryloxyendgruppen-haltigen Polydiorganosiloxanen mit einem Polymerisationsgrad Pₙ von 5 bis 100, bevorzugt 20 bis 80, hergestellt werden.

Die Polydiorganosiloxan-Polycarbonat-Blockpolymeren können auch eine Mischung aus Polydiorganosiloxan-Polycarbonat-Blockcopolymeren mit üblichen polysiloxanfreien, thermoplastischen Polycarbonaten sein, wobei der Gesamtgehalt an Polydiorganosiloxanstruktureinheiten in dieser Mischung ca. 2,5 bis 25 Gew.-% beträgt.

Solche Polydiorganosiloxan-Polycarbonat-Blockcopolymere sind dadurch gekennzeichnet, daß sie in der Polymerkette einerseits aromatische Carbonatstruktureinheiten (1) und andererseits Aryloxyendgruppen-haltige Polydiorganosiloxane (2) enthalten, 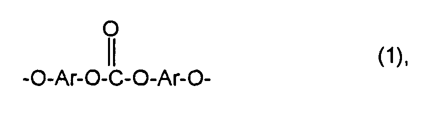 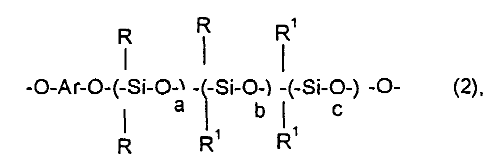 worin
- Ar: gleiche oder verschiedene Arylreste aus Diphenolen sind und
- R und R¹: gleich oder verschieden sind und lineares Alkyl, verzweigtes Alkyl, Alkenyl, halogeniertes lineares Alkyl, halogniertes verzweigtes Alkyl, Aryl oder halogeniertes Aryl, vorzugsweise aber Methyl bedeuten,
und
die Anzahl der Diorganosiloxy-Einheiten n=a+b+c= 5 bis 100, vorzugsweise 20 bis 80, ist.

Alkyl ist in vorstehender Formel (2) beispielsweise C₁-C₂₀-Alkyl, Alkenyl ist in vorstehender Formel (2) beispielsweise C₂-C₆-Alkenyl; Aryl ist in vorstehender Formel (2) C₆-C₁₄-Aryl. Halogeniert bedeutet in vorstehender Formel teilweise oder vollständig chloriert, bromiert oder fluoriert.

Beispiele für Alkyle, Alkenyle, Aryle, halognierte Alkyle und halogenierte Aryle sind Methyl, Ethyl, Propyl, n-Butyl, tert.-Butyl, Vinyl, Phenyl, Naphthyl, Chlormethyl, Perfluorbutyl, Perfluoroctyl und Chlorphenyl.

Derartige Polydiorganosiloxan-Polycarbonat-Blockcopolymere sind z.B. aus US-PS 3 189 662, US-PS 3 821 325 und US-PS 3 832 419 bekannt.

Bevorzugte Polydiorganosiloxan-Polycarbonat-Blockcopolymere werden hergestellt, indem man α,ω-Bishydroxyaryloxyendgruppen-haltige Polydiorganosiloxane zusammen mit anderen Diphenolen, gegebenenfalls unter Mitverwendung von Verzweigern in den üblichen Mengen, z.B. nach dem Zweiphasengrenzflächenverfahren (s. dazu H. Schnell, Chemistry and Physics of Polycarbonates Polymer Rev. Vol. IX, Seite 27 ff, Interscience Publishers New York 1964) umsetzt, wobei jeweils das Verhältnis der bifunktionellen phenolischen Reaktanten so gewählt wird, daß daraus der erfindungsgemäße Gehalt an aromatischen Carbonatstruktureinheiten und Diorganosiloxy-Einheiten resultiert.

Derartige α,ω-Bishydroxyaryloxyendgruppen-haltige Polydiorganosiloxane sind z.B. aus US 3 419 634 bekannt.

ABS-Pfropfpolymerisate im Sinne der Erfindung sind Pfropfpolymerisate aus
A.1) 5 bis 95, vorzugsweise 30 bis 80 Gew.-Teile, einer Mischung aus
   A.1.1) 50 bis 95 Gew.-Teilen Styrol, α-Methylstyrol, halogen- oder methylkernsubstituiertem Styrol, C₁-C₈-Alkylmethacrylat, insbesondere Methylmethacrylat, C₁-C₈-Alkylacrylat, insbesondere Methylacrylat oder Mischungen dieser Verbindungen und
   A.1.2) 5 bis 50 Gew.-Teilen Acrylnitril, Methylacrylnitril, C₁-C₈-Alkylmethacrylaten, insbesondere Methylmethacrylat, C₁-C₈-Alkylacrylat, insbesondere Methylacrylat, Maleinsäureanhydrid, C₁-C₄-alkyl- bzw. phenyl-N-substituierte Maleinimide oder Mischungen dieser Verbindungen auf
A.2) 5 bis 95, vorzugsweise 20 bis 70 Gew.-Teilen Butadien, Polybutadien oder Butadien/Styrol-Copolymerisat mit einer Glasübergangstemperatur unter -10°C.

Solche Pfropfpolymerisate sind z.B. in der DE-OS 2 035 390 (=US-PS 3 644 574) oder in der DE-OS 2 248 242 (=GB-PS 1 409 275) beschrieben.

Da bei der Pfropfreaktion die Pfropfmonomere bekanntlich nicht unbedingt vollständig auf die Pfropfgrundlage ausgepfropft werden, entstehen aus den Pfropfmonomeren Copolymerisate. Unter dem Begriff ABS-Pfropfpolymerisate sind auch solche Produkte zu verstehen, die bedingt durch Polymerisation eben diese Copolymere enthalten.

Der mittlere Teilchendurchmesser d₅₀ des ABS-Pfropfpolymerisates beträgt im allgemeinen 0,5 bis 5 nm, vorzugsweise 0,1 bis 2 nm. Der mittlere Teilchendurchmesser d₅₀ ist der Durchmesser, oberhalb und unterhalb dessen jeweils 50 Gew.-% der Teilchen liegen. Es kann mittels Ultrazentrifugenmessungen (W. Scholtan, H. Lange, Kolloid, Z. Polymere 250 (1972), 782-796) bestimmt werden.

Polyolefine sind Polyethylen, Polypropylen, Poly-1-buten und Polymethylpenten, die noch geringen Mengen nicht konjugierter Diene einpolymerisiert enthalten können. Diese Polymerisate sind bekannt und in Roempp's Chemielexikon, 8. Auflage 1987, Bd. 5, Seite 3307 und in der dort zitierten Literatur beschrieben. Bevorzugt ist Polypropylen.

Als Polyamide werden in den thermoplastischen Polyamidformmassen im allgemeinen aliphatische Polyamide oder Polyamide mit überwiegend aliphatischem Anteil eingesetzt. Bevorzugt sind Polyamid 6 oder Polyamid 66 oder Copolyamide von Polyamid 6 mit Diaminen (bevorzugt C₄-C₁₆-, insbesondere C₄-C₈-Alkylen-diaminen) und Dicarbonsäuren (bevorzugt C₄-C₁₂-, insbesondere C₄-C₈-Alkylen-dicarbonsäuren) oder Polyamide 66 mit einem Comonomerenanteil von höchstens 20 Gew.-%.

### Komponente B

Kupferpyrophosphat-Hydrat [Cu₂P₂O₇H₂O] ist käuflich erhältlich, z.B. bei Riedel de Haen.

### Komponente C

Kupfer(II)-hydroxid-phosphat [Cu₂(OH)PO₄] ist ebenfalls käuflich erhältlich; z.B. bei Riedel de Haen.

Die Komponenten B und C können sowohl in reiner Form als auch in konzentrierter Form (in der Regel Granulate oder Pulver) oder als Batch, d.h. in einem Polymer eingearbeitet, vorliegen.

### Komponente D

Mangansulfathydrat [MnSO₄H₂O] ist ebenfalls käuflich erhältlich.

Die Komponenten B), C) und/oder D) werden vorzugsweise in einer Menge von 0,05 bis 2,5, insbesondere 0,5 bis 2,5 Gew.-Teilen zugesetzt.

### Komponente E

Als Füllstoffe und Verstärkungsstoffe können Glasfasern, Glaskugeln, Glimmer, Silikate, Quarz, Talkum, Titandioxid, Wollastonit, u.a. eingesetzt werden, die auch oberflächenbehandelt sein können. Bevorzugte Verstärkungsstoffe sind handelsübliche Glasfasern. Die Glasfasern, die im allgemeinen einen Faserdurchmesser zwischen 8 und 14 µm haben, können als Endlosfasern oder als geschnittene oder gemahlende Glasfasern eingesetzt werden, wobei die Fasern mit einem geeigneten Schlichtesystem und einem Haftvermittler bzw. Haftvermittlersytem auf Silanbasis ausgerüstet sein können. Vorzugsweise werden der Mischung 8 bis 45 insbesondere 10 bis 40 Gew.-Teile Füll- und Verstärkungsstoffe zugesetzt.

### Komponente F

Als Flammschutzadditive sind handelsübliche organische Verbindungen oder Halogenverbindungen mit Synergisten oder handelsüblichen organische Stickstoffverbindungen oder organisch/anorganische Phosphorverbindungen geeignet. Auch mineralische Flammschutzadditive wie Mg-Hydroxid oder Ca-Mg-Carbonat-Hydrat können eingesetzt werden.

Die erfindungsgemäßen Formmassen können bis zu 20, vorzugsweise 3 bis 18, insbesondere 6 bis 15 Gew.-Teile halogenierte Verbindungen und bis zu 8, vorzugsweise 2 bis 6 Gew.-Teile Antimonverbindungen, insbesondere Antimontrioxid oder Antimonpentoxid enthalten.

Als halogenhaltige, insbesondere bromierte und chlorierte, organische Verbindungen seien beispielhaft genannt:
Ethylen-1,2-bistetrabromphthalimid,
Epoxidiertes Tetrabrombisphenol A-Harz,
Tetrabrombisphenol-A-oligocarbonat,
Tetrachlorbisphenol-A-oligocarbonat,
Pentabrompolyacrylat,
bromiertes Polystyrol.

Pentabrompolyacrylat hat im allgemeinen mittlere Molekulargewichte M̅_{w} (Gewichtsmittel) von 10.000 bis 200.000, bromiertes Polystyrol im allgemeinen 10.000 bis 500.000.

Bevorzugt werden epoxidiertes Tetrabrombisphenol-A und Tetrabrombisphenol-A-Oligocarbonat verwendet.

Expoxidiertes Tetrabrombisphenol-A ist ein bekanntes Diepoxidharz mit einem Molekulargewicht von etwa 350 bis etwa 2.100, vorzugsweise 360 bis 1.000, besonders bevorzugt 370 bis 400, und besteht im wesentlichen aus mindestens einem Kondensationsprodukt von Bisphenol A und Epihalogenhydrin und wird beschrieben durch die Formel (I) 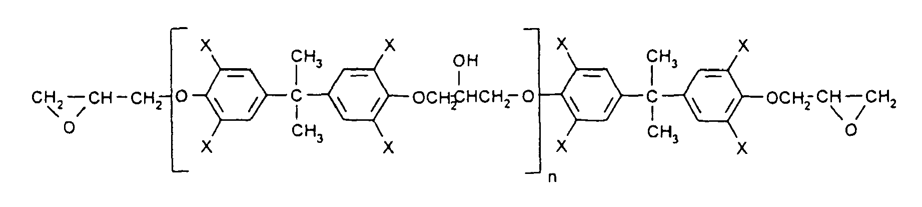 worin X Wasserstoff oder Brom darstellt und n eine Durchschnittszahl zwischen Null und weniger als 2,3 ist (vgl. z.B. EP-A 180 471).

Tetrabrombisphenol-A-oligocarbnat bzw. Tetrachlorbisphenol-A-oligocarbonat ist beschrieben durch die Formel (II), wobei die Oligomere entweder mit Phenol oder mit Tribromphenol bzw. Trichlorphenol terminiert werden: 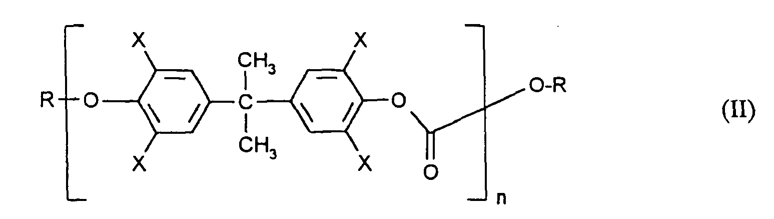 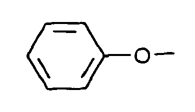 R = oder 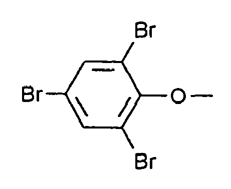 worin X Wasserstoff, Brom oder Chlor darstellt, n ist eine Durchschnittszahl zwischen 4 und 7.

Tetrabrom(chlor)bisphenol-A-oligocarbonat ist bekannt und nach bekannten Verfahren herstellbar.

Als organische Phosphorverbindungen sind die Phosphorverbindungen gemäß EP-A 345 522 (US-PS 061.745) oder DE-OS 43 28 656.9 in den dort beschriebenen Mengen geeignet, z.B. Triphenylphosphat, oligomere Phosphate, Resorcindiphosphat oder eine Mischung daraus.

### Komponente G

Als Elastomermodifikatoren kommen handelsübliche EP(D)M-Kautschuke, Pfropfkautschuke auf Basis Butadien, Styrol, Acrylnitril (siehe z.B. die oben beschriebenen ABS-Propfpolymerisate), Acrylatkautschuke, thermoplastische Polyurethane oder EVA-Copolymere mit oder ohne funktionelle Kopplungsgruppen infrage.

### Komponente H)

Antimontrioxid ist allgemein bekannt. Falls Antimontrioxid zugesetzt wird, werden bevorzugt 1 bis 6, besonders bevorzugt 2 bis 5 Gew.-Teile verwendet. Besonders vorteilhaft ist Antimontrioxid in Kombination mit Kupferpyrophosphat-Hydrat.

Die erfindungsgemäßen Formmassen können übliche Additive, wie Gleit- und Entformungsmittel, Nukleierungsmittel, Antistatika, Stabilisatoren enthalten.

Die erfindungsgemäßen Formmassen aus den jeweiligen Komponenten und gegebenenfalls weiteren bekannten Zusätzen wie Stabilisatoren, Farbstoffen, Pigmenten, Gleit- und Entformungsmitteln, Verstärkungsstoffen, Nukleierungsmittel sowie Antistatika, können hergestellt werden, indem man die jeweiligen Bestandteile in bekannter Weise vermischt und bei Temperaturen von 180°C bis 330°C in üblichen Aggregaten wie Innenknetern, Extrudern, Doppelwellenschnecken schmelzcompoundiert oder schmelzextrudiert.

### Beispiele

### Beispiel 1

1 % Kupferpyrophosphat-Hydrat wird mit einem Compound aus
80,9 Gew.-% Polybutylenterephthalat, Grenzviskosität I.V. = 1,135-1,210
13,5 Gew.-% Ethylen-bis-tetrabromphthalimid (Saytex BT93 weiß, Fa. Ethyl)
5,0 Gew.-% Antimontrioxid und
0,6 Gew.-% Verarbeitungsstabilisatoren
physikalisch gemischt und mittels einer Spritzgießmaschine zu Formkörpern verarbeitet.

### Beispiel 2

1 Gew.-% Kupferpyrophosphat-Hydrat wird mit einem Compound aus
80,9 Gew.-% Polybutylenterephthalat, Grenzviskosität I.V. = 1,135-1,210
13,5 Gew.-% Ethylen-bis-tetrabromphthalimid (Saytex BT93 weiß, Fa. Ethy)
5,0 Gew.-% Antimontrioxid und
0,6 Gew.-% Verarbeitungsstabilisatoren
physikalisch gemischt und anschließend mittels eines Extruders compoundiert. Das erhaltene Granulat wird auf einer Spritzgußmaschine zu Platten verspritzt.

### Beispiel 3

1 Gew.-% Kupferpyrophosphat-Hydrat wird mit einem Compound aus
99,5 Gew.-% Polybutylenterephthalat, Grenzviskosität I.V. = 0.90-0,95 und
0,5 Gew.-% Verarbeitungsstabilisatoren
physikalisch gemischt und anschließend mittels eines Extruders compoundiert. Das erhaltene Granulat wird auf einer Spritzgußmaschine zu Platten verspritzt.

### Beispiel 4

1,0 Gew.-% Kupferpyrophosphat-Hydrat wird mit einem Compound aus
44,3 Gew.-% Polybutylenterephthalat, Grenzviskosität I.V. = 1,015-1,135,
20,0 Gew.-% Glasfasern (4,5 mm durchschnittliche Länge)
20,0 Gew.-% SAN
15,0 Gew.-% Pfropfkautschuk
0,7 Gew,-% Verarbeitungsstabilisatoren
physikalisch gemischt und anschließend mittels eines Extruders compoundiert. Das erhaltene Granulat wird auf einer Spritzgußmaschine zu Platten verspritzt.

### Beispiel 5

1,0 Gew.-% Kupferpyrophosphat-Hydrat wird mit einem Compound aus
79,5 Gew.-% Polybutylenterephthalat, Grenzviskosität I.V. = 0,90-0,95
20,0 Gew.-% Glasfasern (4,5 mm durchschnittliche Länge),
0,50 Gew.-% Verarbeitungsstabilisatoren
physikalisch gemischt und anschließend mittels eines Extruders compoundiert. Das erhaltene Granulat wird auf einer Spritzgußmaschine zu Platten verspritzt.

### Beispiel 6

1,0 Gew.-% Kupferpyrophosphat-Hydrat wird mit einem Compound aus
54,9 Gew.-% Polybutylenterephthalat, Grenzviskosität I.V. = 0,90-0,95
30,0 Gew.-% Glasfasern (4,5 mm durchnittliche Länge)
10,0 Gew.-% Tetrabrombisphenol-A
4,5 Gew.-% Antimontrioxid
0,6 Gew.-% Verarbeitungsstabilisatoren
physikalisch gemischt und anschließend mittels eines Extruders compoundiert. Das erhaltene Granulat wird auf einer Spritzgußmaschine zu Platten verspritzt.

### Beispiel 7

0,5 Gew.-% Kupferpyrophosphat-Hydrat und
0,5 Gew.-% Kupfer(II)-hydroxid-phosphat, wird mit einem Compound aus
80,9 Gew.-% Polybutylenterephthalat, Grenzviskosität LV. = 1,135-1,210
13,5 Gew.-% Ethylen-bis-tetrabromphthalimid
5,0 Gew.-% Antimontrioxid und
0,6 Gew.-% Verarbeitungsstabilisatoren
physikalisch gemischt und anschließend mittels eines Extruders compoundiert. Das erhaltene Granulat wird auf einer Spritzgußmaschine zu Platten verspritzt.

### Beispiel 8

0,5 Gew.-% Kupferpyrophosphat-Hydrat und
0,5 Gew.-% Kupfer(II)-hydroxid-phosphat wird mit einem Compound aus
79,5 Gew.-% Polybutylenterephthalat, Grenzviskosität I.V. = 0,90-0,95
20,0 Gew.-% Glasfasern, 4,5 mm
0,50 Gew.-% Verarbeitungsstabilisatoren
physikalisch gemischt und anschließend mittels eines Extruders compoundiert. Das erhaltene Granulat wird auf einer Spritzgußmaschine zu Platten verspritzt.

### Beispiel 9

0,5 Gew.-% Kupfer(II)-hydroxid-phosphat
0,5 Gew.-% Mangansulfat-Hydrat
0,5 Gew.-% Bayer-Titan R-KB2
98,5 Gew.-% Durethan BKV 30 H 1-0
physikalisch gemischt und anschließend mittels eines Extruders compoundiert. Das erhaltene Granulat wird auf einer Spritzgußmaschine zu Platten verspritzt.

Die Platten werden mit einem FOBA-LAS Nd-YAG-Laser bei 532 und 1 064 nm Wellenlänge beschriftet.

Je nach Intensität der Laserstrahlenenergie werden schwarze, dunkle oder dunkelgraue Zeichen auf hellem Hintergrund erzeugt.

### Ergebnis aus den Beispiel 1 bis 9

Alle Schriftzeichen und Symbole zeichnen sich durch sehr gute Kontraste mit unterschiedlichen dunkelgrauen bis schwarzen Abstufungen aus.

## Patentansprüche

1. Thermoplastische Formmasse enthaltend,
A) 99,95 bis 30 Gew.-Teile thermoplastisches Polymer,
B) 0 bis 3 Gew.-Teile Kupferpyrophosphat-Hydrat,
C) 0 bis 3 Gew.-Teile Kupfer(II)-hydroxid-phosphat,
D) 0 bis 3 Gew.-Teile Mangansulfathydrat,
E) 0 bis 50 Gew.-Teile Füll- und Verstärkungsstoffe,
F) 0 bis 60 Gew.-Teile Flammschutzadditive
G) 0 bis 30 Gew.-Teile Elastomermodifikationen,
H) 0 bis 8 Gew.-Teile Antimontrioxid,
wobei mindestens eine der Komponenten B) oder D) in der Mischung enthalten ist und als Komponente (A) Polymere oder Copolymere auf Basis von Polyalkylenterephthalaten, aromatischen Polyestern, Polyamid, Polycarbonat, Polyacrylat, Polymethacrylat, ABS-Pfropfpolymerisate, Polyolefine wie Polyethylen oder Polypropylen, Polystryrol, Polyvinylchlorid, Polyoxymethylen, Polyimid, Polyether und Polyetherketone, die einzeln oder als Blend aus verschiedenen Polymeren eingesetzt werden können.

2. Thermoplastische Formmassen gemäß Anspruch 1, wobei als Flammschutzadditive Magnesiumhydroxid, Calcium-Magnesium-Carbonat-Hydrat, halogenierte Verbindungen, gegebenenfalls in Kombination mit Antimonoxiden, eingesetzt werden.

3. Thermoplastische Formmasse gemäß Anspruch 2, wobei als halogenierte Verbindungen Ethylen-1,2-bistetrabromphthalimid, epoxidiertes Tetrabrombisphenol A-Harz, Tetrabrombisphenol-A-oligocarbonat, Tetrachlorbisphenol-A-oligocarbonat, Pentabrompolyacrylat, bromiertes Polystyrol und/oder organische Phosphorverbindungen eingesetzt wird.

4. Verwendung der Formmassen gemäß Anspruch 1 zur Herstellung von Formkörpern.

5. Formkörper, hergestellt aus thermoplastischen Formmassen gemäß Anspruch 1.

## Claims

1. Thermoplastic moulding composition comprising
A) 99.95 to 30 parts by weight of thermoplastic polymer,
B) 0 to 3 parts by weight of copper pyrophosphate hydrate,
C) 0 to 3 parts by weight of copper(II) hydroxide phosphate,
D) 0 to 3 parts by weight of manganese sulphate hydrate,
E) 0 to 50 parts by weight of filling and reinforcing materials,
F) 0 to 60 parts by weight of flame retardant additives,
G) 0 to 30 parts by weight of elastomer modifications,
H) 0 to 8 parts by weight of antimony trioxide,
wherein at least one of the components B) or D) is present in the mixture and component (A) comprises polymers or copolymers based on polyalkylene terephthalates, aromatic polyesters, polyamide, polycarbonate, polyacrylate, polymethacrylate, ABS graft polymers, polyolefins such as polyethylene or polypropylene, polystyrene, polyvinyl chloride, polyoxymethylene, polyimide, polyethers and polyether ketones, which may each be used individually or as a blend of various polymers.

2. Thermoplastic moulding compositions according to Claim 1, wherein magnesium hydroxide, calcium magnesium carbonate hydrate, halogenated compounds, if appropriate combined with antimony oxides, are used as flame retardant additives.

3. Thermoplastic moulding composition according to Claim 2, wherein ethylene-1,2-bistetrabromophthalimide, epoxidized tetrabromobisphenol A resin, tetrabromobisphenol A oligocarbonate, tetrachlorobisphenol A oligocarbonate, pentabromopolyacrylate, brominated polystyrene and/or organic phosphorus compounds is used as halogenated compounds.

4. Use of the moulding compositions according to Claim 1 for producing moulded articles.

5. Moulded article produced from thermoplastic moulding compositions according to Claim 1.

## Revendications

1. Masse de moulage thermoplastique contenant
A) 99,95 à 30 parties en poids de polymère thermoplastique,
B) 0 à 3 parties en poids d'hydrate de pyrophosphate de cuivre,
C) 0 à 3 parties en poids de phosphate-hydroxyde de cuivre (II),
D) 0 à 3 parties en poids d'hydrate de sulfate de manganèse,
E) 0 à 50 parties en poids de matières de remplissage et de renforcement,
F) 0 à 60 parties en poids d'additifs ignifuges,
G) 0 à 30 parties en poids de modifications élastomères,
H) 0 à 8 parties en poids de trioxyde d'antimoine,
dans laquelle au moins un des composants B) ou D) est contenu dans le mélange et, comme composant (A), des polymères ou copolymères à base de téréphtalates de polyalkylène, de polyesters aromatiques, de polyamide, de polycarbonate, de polyacrylate, de polyméthacrylate, de polymères de greffage ABS, de polyoléfines telles que du polyéthylène ou du polypropylène, de polystyrène, de chlorure de polyvinyle, de polyoxyméthylène, de polyimide, de polyéther et de polyéthercétones, qui peuvent être mis en oeuvre isolément ou sous la forme d'un mélange de différents polymères.

2. Masses de moulage thermoplastiques suivant la revendication 1, dans lesquelles, comme additifs ignifuges, on met en oeuvre de l'hydroxyde de magnésium, de l'hydrate de carbonate de calcium-magnésium, des composés halogénés, éventuellement en combinaison avec des oxydes d'antimoine.

3. Masse de moulage thermoplastique suivant la revendication 2, dans laquelle, comme composés halogénés, on met en oeuvre de l'éthylène-1,2-bistétrabromophtalimide, une résine époxydée de tétrabromobisphénol A, de l'oligocarbonate de tétrabromobisphénol A, de l'oligocarbonate de tétrachlorobisphénol A, du polyacrylate pentabromé, du polystyrène bromé et/ou des composés organiques du phosphore.

4. Utilisation des masses de moulage suivant la revendication 1, pour la fabrication de corps façonnés.

5. Corps façonnés, préparés à partir des masses de moulage thermoplastiques suivant la revendication 1.
